# EUROPEAN PATENT SPECIFICATION

(11) **EP 0 331 738 B1**
(45) Date of publication and mention of the grant of the patent: **27.11.1996**
(21) Application number: 88906913.4
(22) Date of filing: 09.08.1988
(51) Int. Cl.: H01J 61/16, H01J 61/44

(54) **GREEN LIGHT EMITTING RARE GAS DISCHARGE LAMP**
GRÜNLICHTAUSSTRAHLENDE ENTLADUNGSBIRNE MIT SELTENEM GAS
LAMPE A LUMINESCENCE A GAZ RARES EMETTANT DE LA LUMIERE VERTE

(30) Priority: 10.08.1987 JP 199360/87; 10.02.1988 JP 29351/88
(43) Date of publication of application: 13.09.1989
(73) Proprietor: MITSUBISHI DENKI KABUSHIKI KAISHA, Tokyo (JP)
(72) Inventor: ISHIKAWA, Kazutoshi Mitsubishi Denki K. K. Ofuna, Kanagawa 247 (JP); MURAKAMI, Katsuo Mitsubishi Denki K. K. Ofuna, Kanagawa 247 (JP); MITSUHASHI, Seishiro Mitsubishi Denki K. K. Ofuna, Kamakura-shi Kanagawa 247 (JP); OSAWA, Takashi Mitsubishi Denki K. K. Ofuna, Kanagawa 247 (JP); KAMANO, Yujiro Mitsubishi Denki K. K. Ofuna, Kanagawa 247 (JP); ANZAI, Yoshinori Mitsubishi Denki K. K. Shonin, Kanagawa 247 (JP); SAIKATSU, Takeo Mitsubishi Denki K. K. Shohin, Kanagawa 247 (JP); ADACHI, Hiromi Mitsubishi Denki K. K. Ofuna, Kanagawa 247 (JP)
(74) Representative: Eisenführ, Speiser & Partner
(86) International application number: PCT/JP88/00788
(87) International publication number: WO 89/01700

(56) References cited:
- EP-A- 0 037 688
- EP-A- 0 206 393
- BE-A- 418 426
- JP-A- 1 200 549
- JP-B- 5 342 389
- JP-B- 5 635 261
- JP-B-50 038 264
- US-A- 3 758 413
- US-A- 4 000 436
- PATENT ABSTRACTS OF JAPAN, vol. 5, no. 153 (E-76)[825], 26th September 1981 & JP-A-56 84 859
- PATENT ABSTRACTS OF JAPAN, vol. 6, no. 54 (C-097), 9th April 1982 &JP-A-56 167 783

## Description

This invention relates to a green-light-emitting gas discharge lamp comprising a glass tube filled with gas capable of emitting vacuum ultraviolet rays, and a layer of green-light-emitting phosphor comprises terbium-activated yttrium silicate provided on an inner surface of the glass tube.

In recent years there has been a demand for a green-light-emitting light source as a light source for office automation equipment such as facsimiles, and there have been known low-pressure rare gas discharge lamps which meet the demand.

The low-pressure rare gas discharge lamps suffer less deterioration and less temperature dependency of luminous intensity during lighting, as compared with general fluorescent lamps filled with mercury, and are capable of instantaneous lighting. The low-pressure rare gas discharge lamps, however, are inferior to the general fluorescent lamps in brightness (luminance) and chromaticity, and are therefore not in wide use at present as light sources for general illumination.

However, the performance and characteristics of the low-pressure rare gas discharge lamps have been reconsidered from the viewpoint of use thereof as light sources for office automation equipment. On the other hand, there has been a keen request for technical developments for enhancing the performance of the low-pressure rare gas discharge lamps in respect of brightness and chromaticity.

Examples of the prior art developed to meet the request include the following ones (i) to (ix).
(i) Japanese Patent Publication Nos. 58-119151 (1983) and 58-119152 (1983) disclose, as red light sources, low-pressure rare gas discharge lamps in which discharge containers are filled with a mixed gas of neon and argon or a mixed gas of neon and krypton and which, by high-frequency lighting, are capable of electric discharge free of moving striation at small currents.
   The discharge lamps disclosed in the publications merely use the rare gases only and, therefore, the lamps are not yet satisfactory in brightness and chromaticity. Thus, only red lamps utilizing the neon light emission have been put to practical use.
(ii) Xerox Disclosure Journal, Vol. 8, No. May/June 1983 discloses, on page 269, as a green light source, a rare gas discharge lamp in which at least one of neon and xenon is used and in which ZnSiO₄:Mn is used as a light-emitting medium.
   In this literature, however, only a gas discharge light-emitting element using a blue-light-emitting phosphor activated with cerium or bivalent europium is disclosed, and nothing is disclosed as to high-efficiency gree-light-emitting rare gas discharge lamps. As the green-light-emitting phosphor, only Zn₂SiO₄:Mn is disclosed in this literature.
(iii) Japanese Patent Publication No. 53-42389 (1978) discloses several green-light-emitting phosphors having a high excitation spectrum at a wavelength of not longer than 200 nm in vacuum ultraviolet excitation spectra.
   Of the phosphors having an excitation spectrum in a vacuum ultraviolet region of wavelengths of not more than 200 nm, however, few have been put to practical use, and only Zn₂SiO₄:Mn has been used as a green-light-emitting phosphor, with extreme unsatisfaction.
(iv) Japanese Patent Publication No. 48-37670 (1973) discloses green and red-light-emitting phosphors which are represented by the general formula XLn₂O₃·YSiO₂:ZL′n (where, Ln is lanthanum, yttrium or a mixture thereof, L'n is terbium, europium or a mixture thereof, the ratio X/Y is in the range from 0.25/1 to 1/1, and the ratio Z/Y is in the range from 0.005/1 to 0.4/1) and which are excited at a mercury resonance line of 254 nm or 365 nm.
   This publication discloses a terbium-activated lanthanum silicate as a green-light-emitting phosphor excited by the mercury resonance line of 254 nm or 365 nm as mentioned above. The publication, however, does not disclose anything as to the excitation characteristics in a vacuum ultraviolet region and the light emission characteristics; therefore, there are problems as to the characteristics. Besides, the lamps utilizing the mercury resonance line shows heavy temperature dependency of luminance when used as a light source for office automation equipment, and has a problem with respect to instantaneous lighting. Thus, it has been impossible to put such lamps into practical use as light sources for office automation equipment.
(v) Japanese patent application No. 50-38264 (1975) discloses a low pressure gas discharge lamp which comprises a discharge tube. The discharge tube is filled with Ne and/or Ar and Xe and/or Kr and the discharge tube was being coated with a layer comprising material for converting UV into visible radiation.
   The publication, however, does only disclose discharge tubes containing two different types of rare gases and only the above-mentioned combinations of rare gases are suitable to fulfill the objects of this publication.
(vi) French patent publication No. 418 426 (1936) discloses a rare gas discharge lamp which uses only xenon or krypton as rare gases.
   This publication, however, does not disclose any other rare-gases which could be used to produce light and this publication is limited to at most two rare gases.
(vii) Japanese patent application No. 56-84859 (1979) discloses a high-efficiency lamp having a given shape and charged with a given gas. The gas which is charged in the lamp includes either Kr or Xe and the rest of the gas consists of either Ar or Ne.
   This publication, however, discloses a rare gas discharged lamp of at least two rare gases in a certain combination.
(viii) United-States patent publication No. US-A-37 58 413 (1973) discloses terbium activated yttrium silicate phosphors which emit green light when excited by ultraviolet, cathode ray or x-ray radiation. The phosphors of this publication may be used in fluorescent lamps and in cathode luminescent screens for cathode ray tubes.
   The publication, however, does not disclose anything as to excitation characteristics of phosphors which can be used in a rare gased discharge lamp using a rare gas capable of emitting vacuum UV-rays at a wave-length different than the Hg-wave-length of 253,7 nm. This publication is therefore limited to the typical mercury lamp excitation.
(ix) Japanese patent publication 56 16 77 83 discloses a fluorescent substance of a specified composition with improved brightness, emitting green light by excitation by means of an electron beam and UV ray, which is prepared by partially substituting yttrium silicate with scandium followed by activation with terbium.
   This publication, however, does not disclose anything as to the excitation characteristics of a rare gas discharge lamp.
(x) European patent application 206 393 A1 (1986) discloses a low-pressure mercury-vapor discharge lamp provided with a luminescent screen. The luminescent screen is provided with a zirconium- and/or terbium-activated silicate having an apatite crystal structure according to the formula

   Ln_{10-x-p-q}Mₓ ^{II}TbₚZr_{q}(SiO₄)_{6-y}(M^{III}O₄)_{y}O_{x+y-q}N_{2-x-y+q}In

   where Ln represents at least one of the elements Y, La andGd, M" represents at least one of the elements Mg, Ca and /or Sr and M"' represents at least one of the elemements Al and B.
   This publication, however, does not disclose anything as to the excitation characteristics of a rare gas discharge lamp but is limited to the excitation by mercury.

As has been described above, none of the prior art makes it possible to fulfill the performance characteristics such as luminance and chromaticity while maintaining the lamp characteristics of less deterioration and less temperature dependency of luminous intensity during lighting as well as capability of instantaneous lighting. Therefore, the lamps according to the prior art involve many practical problems, such as incapability of being used as high-performance green-light-emitting light sources for office automation equipment.

It is an object of this invention to obtain a green-light-emitting rare gas discharge lamp which causes a specified green-light-emitting phosphor to emit light by ultraviolet rays emitted from a rare gas and which is enhanced in luminous efficancy while maintaining the characteristic features of rare gas discharge, such as less deterioration and less temperature dependency of luminous intensity during lighting as well as capability of instantaneous lighting, to be thereby practicable as a high-performance green-light-emitting light source for office automation equipment, for instance.

In order to attain the above object, the above-mentioned green-light-emitting rare gas discharge lamp according to this invention is characterized in that the gas is a rare gas emitting ultraviolet rays of a wave-length of not more than 200 nm and comprises at least one selected from the group consisting of xenon, neon, helium, argon and krypton.

The green-light-emitting phosphor layer is more effective when the layer comprises at least one selected from the group consisting of boron, aluminum, phosphorus, scandium and the lanthanum series elements.

Since green-light-emitting rare gas discharge lamp of this invention comprises the above-mentioned components, the vacuum ultraviolet rays of a wavelength of not longer than 200 nm emitted from the rare gas comprising at least one of xenon, neon, argon, helium and krypton excites the green-light-emitting phosphor comprising the terbium-activated yttrium silicate, whereby green-light-emission with a main peak at 543 nm is obtained, and a 40 to 50% improvement in luminance is achieved, as compared with the case of using Zn₂SiO₄:Mn according to the prior art.

Moreover, when the green-light-emitting phosphor layer of the terbium-activated yttrium silicate comprises at least one selected from the group consisting of boron, aluminum, phosphorus, scandium and the lanthanum series elements, a further improvement in the radiant efficiency upon excitation by vacuum ultraviolet rays of the wavelength of not longer than 200 nm is achievable.

As has been described above, the green-light-emitting rare gas discharge lamp according to this invention shows enhanced luminous efficacy, such as luminance and color of light, while maintaining the characteristic features of rare gas discharge, such as less deterioration of luminous intensity and less temperature dependency during lighting as well as capability of instantaneous lighting. Therefore, the green-light-emitting rare gas discharge lamp of this invention is suitable for use as a green-light-emitting light source for office automation equipment with high reliability.

Other advantageous compositions of the phosphor of the present invention are claimed in the subclaims.

Some embodiments of the present invention will now be described more fully with reference to the following drawings, in which:
Fig. 1 is a diagram showing the relationship between gas pressure and normal luminance in the case of using Y₂SiO₅:Tb and ZnSiO₄:Mn;
Fig. 2 is a diagram showing the relationship between gas pressure and life in the case where the gas composition is fixed at Ne:Xe = 90:10;
Fig. 3 is a diagram showing the temperature-luminance characteristic relationship in this invention;
Fig. 4 is a diagram showing the relationship between gas pressure and normal luminance in the case of using (Y_{0.73}Sc_{0.20}Tb_{0.07})₂SiO₅ and ZnSiO₄:Mn;
Fig. 5 is a diagram showing the relationship between gas pressure and life in the case where the gas composition is fixed at Ne:Xe = 90:10;
Fig. 6 is a diagram showing the relationship between gas pressure and normal luminance in the case of using (Y_{0.83}Gd_{0.10}Tb_{0.07})₂SiO₅ and ZnSiO₄:Mn;
Fig. 7 is a diagram showing the relationship between gas pressure and luminance in the case where the gas composition is fixed at Ne:Xe = 95:5; and
Fig. 8 is a diagram showing the relationship of lumen maintenance factor during lighting in the case of using (Y_{0.93}Tb_{0.07})₂O₃·0.98SiO₂·0.001Al₂O₃, (Y_{0.73}Sc_{0.20}Tb_{0.07})₂ SiO₅ and ZnSiO₄:Mn.

### [Example 1]

An inner peripheral surface of a glass tube 15 mm in outside diameter and 285 mm in length was coated with a layer of a green-light-emitting phosphor comprising terbium-activated yttrium silicate having a composition of (Y_{0.93}Tb_{0.07})₂SiO₅, electrodes were fitted to both ends of the glass tube in a sealing manner, and the glass tube was filled with a mixed gas of neon and xenon at a pressure of 0,665 to 13,3 hPa (0.5 to 10 Torr), to produce a lamp. The characteristics of the lamp were examined by various experiments.

Table 1 shows the experimental results, specifically the lamp characteristics when the neon-xenon mixing ratio and the pressure of the gas filling the glass tube were varied.

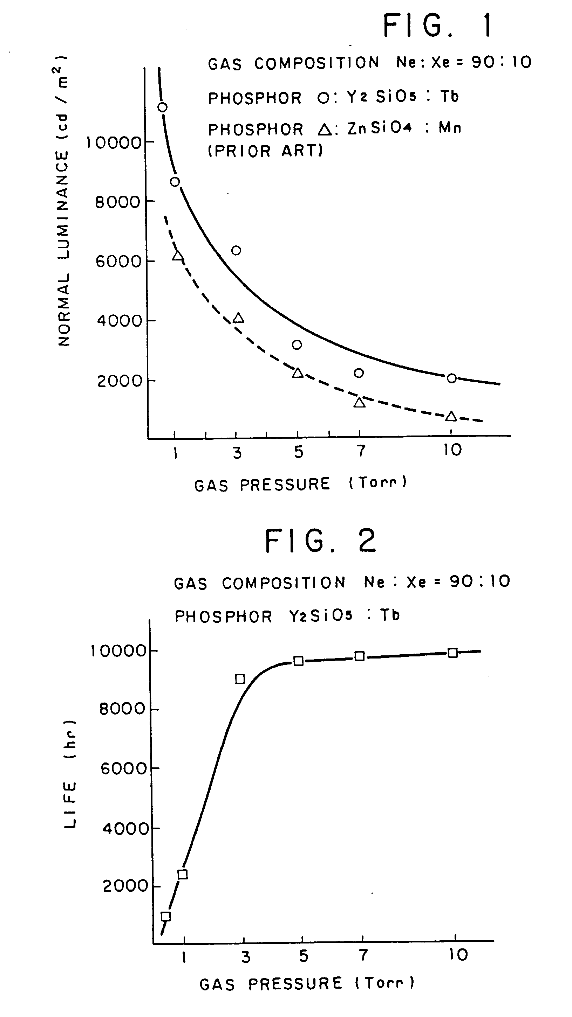

Fig. 1 shows the relationship between gas pressure and normal luminance, i.e., variation of normal luminance with gas pressure, in the case of using a green-light-emitting phosphor layer comprising terbium-activated yttrium silicate and in the case of using a manganese-activated zinc silicate phosphor, whereas Fig. 2 shows the relationship of life to gas pressure.

As shown in Table 1 and Fig. 1, a lamp filled with mixed gas of 90% neon and 10% xenon at a pressure of 3,99 hPa (3 Torr) had a normal luminance of 6,150 cd/m², which is 1.5 times the luminance obtained by using a conventional ZnSiO₄:Mn phosphor, and the life of the lamps was 9,300 hours, as shown in Fig. 2.

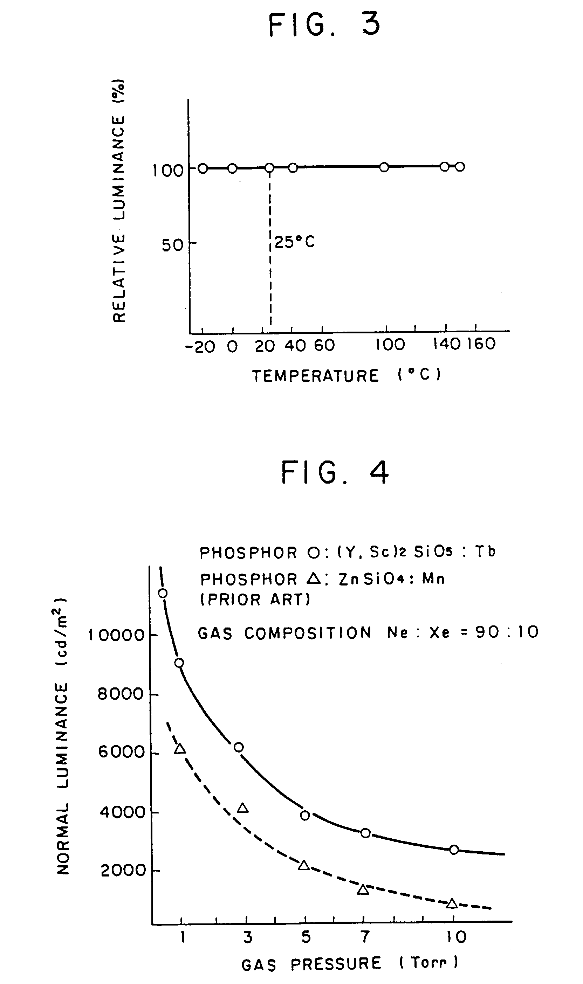

Besides, as is clear from Fig. 3 which shows the temperature-luminance characteristics, the experimental results revealed extremely favorable luminance-temperature characteristic of the lamp at temperatures down to -20°C.

**Table 1**

| No. | Gas composition [%] | | Gas pressure hPa(Torr) | Normal luminance (cd/m²) |
|---|---|---|---|---|
| | Ne | Xe | | |
| 1 | 99 | 1 | 0,665(0.5) | 15,200 |
| 2 | | | 1,33(1) | 11,480 |
| 3 | | | 3,99(3) | 8,200 |
| 4 | | | 6,65(5) | 4,130 |
| 5 | | | 13,3(10) | 1,450 |
| 6 | 95 | 5 | 0,665(0.5) | 15,000 |
| 7 | | | 1,33(1) | 11,060 |
| 8 | | | 3,99(3) | 7,960 |
| 9 | | | 6,65(5) | 4,010 |
| 10 | | | 13,3(10) | 1,300 |
| 11 | 90 | 10 | 0,665(0.5) | 12,000 |
| 12 | | | 1,33(1) | 8,630 |
| 13 | | | 3,99(3) | 6,150 |
| 14 | | | 6,65(5) | 3,090 |
| 15 | | | 13,3(10) | 1,990 |
| 16 | 50 | 50 | 0,665(0.5) | 3,040 |
| 17 | | | 1,33(1) | 2,100 |
| 18 | | | 3,99(3) | 1,500 |
| 19 | | | 6,65(5) | 754 |
| 20 | | | 13,3(10) | 400 |

### [Example 2]

An inner peripheral surface of a glass tube 15 mm in outside diameter and 285 mm in length was coated with a green-light-emitting phosphor comprising terbium-activated yttrium silicate, with the terbium concentration varied, and luminance measurement was carried out. In this case, lamps were produced for trial by using a gas composition of 90% neon and 10% xenon and fixing the gas pressure at 3,99±0.27 hPa (3.0 ± 0.2 Torr). The results are shown in Table 2.

In the phosphor represented by aY₂O₃·bSiO₂:cTb, the optimum value of c/b is in the range of 0.1 ≦ c/b ≦ 0.2, and the normal luminance of the lamp was 6,530 cd/m² for c/b = 0.1.

**Table 2**

| c/b | Relative luminance [%] |
|---|---|
| 0.05 | 90 |
| 0.1 | 100 |
| 0.2 | 100 |
| 0.3 | 95 |
| 0.4 | 75 |

### [Example 3]

An inner peripheral surface of a glass tube 8 mm in outside diameter and 285 mm in length was coated with a green-light-emitting phosphor comprising terbium-activated yttrium scandium silicate having a chemical composition of (Y_{0.73}Sc_{0.20}Tb_{0.07})₂SiO₅, electrodes were fitted to both ends of the glass tube in a sealing manner, and the glass tube was filled with a mixed gas of neon and xenon at a pressure of 0,665 to 13,3 hPa (0.5 to 10 Torr) to produce a lamp. The characteristics of the lamps thus produced were examined by various experiments.

Table 3 shows the experimental results, specifically the lamp characteristics when the neon-xenon mixing ratio and the pressure of the gas filling the glass tube were varied.

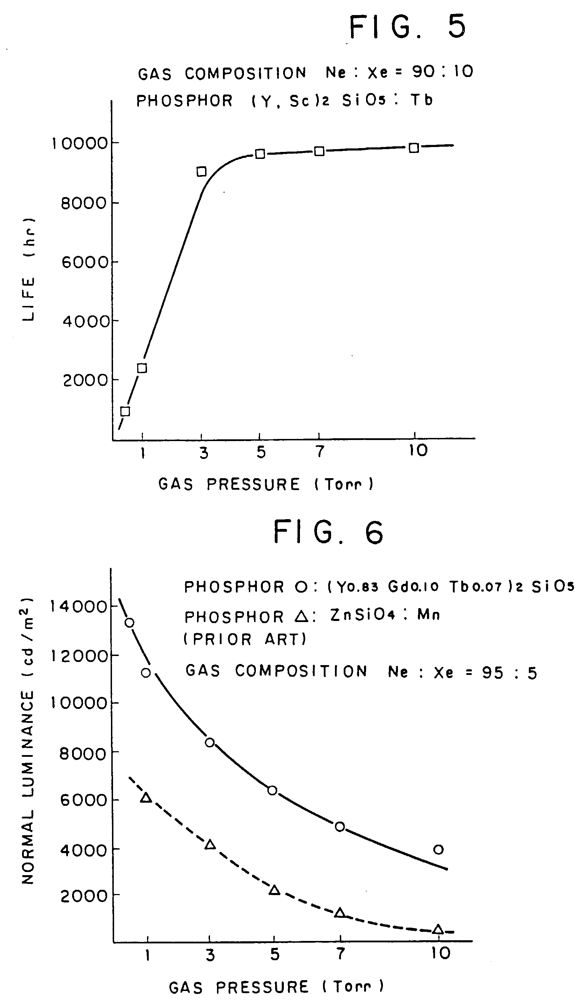

Fig. 4 shows the variation of normal luminance with gas pressure, in the case of using the terbium-activated yttrium scandium silicate phosphor (Y_{0.73}Sc_{0.20}Tb_{0.07})₂SiO₅ and in the case of using a manganese-activated zinc silicate phosphor, whereas Fig. 5 shows the relationship of life to gas pressure.

As shown in Table 3 and Fig. 4, in the experiments, a lamp filled with a mixed gas of 90% neon and 10% of xenon at a pressure of 3,99 hPa (3 Torr) had a normal luminance of 6,380 cd/m², which is 1.6 times the luminance obtained by using a conventional ZnSiO₄:Mn phosphor, and the life of the lamp was 9,300 hours, as shown in Fig. 5.

Besides, the luminance-temperature characteristic of the lamp was extremely favorable at temperatures of -20 to 150°C, like that shown in Fig. 3.

**Table 3**

| No. | Gas composition [%] | | Gas pressure hPa(Torr) | Normal luminance (cd/m²) |
|---|---|---|---|---|
| | Ne | Xe | | |
| 1 | 99 | 1 | 0,665(0.5) | 15,700 |
| 2 | | | 1,33(1) | 12,300 |
| 3 | | | 3,99(3) | 9,000 |
| 4 | | | 6,65(5) | 4,670 |
| 5 | | | 13,3(10) | 2,100 |
| 6 | 95 | 5 | 0,665(0.5) | 15,700 |
| 7 | | | 1,33(1) | 11,500 |
| 8 | | | 3,99(3) | 8,350 |
| 9 | | | 6,65(5) | 4,320 |
| 10 | | | 13,3(10) | 1,700 |
| 11 | 90 | 10 | 0,665(0.5) | 12,800 |
| 12 | | | 1,33(1) | 9,030 |
| 13 | | | 3,99(3) | 6,380 |
| 14 | | | 6,65(5) | 3,570 |
| 15 | | | 13,3(10) | 2,120 |
| 16 | 50 | 50 | 0,665(0.5) | 3,500 |
| 17 | | | 1,33(1) | 2,700 |
| 18 | | | 3,99(3) | 2,050 |
| 19 | | | 6,65(5) | 860 |
| 20 | | | 13,3(10) | 550 |

### [Example 4]

An inner peripheral surface of a glass tube 15 mm in outside diameter and 285 mm in length was coated with a green-light-emitting phosphor comprising terbium-activated yttrium scandium silicate, with the terbium concentration varied, and luminance measurement was carried out. In this case, lamps were produced for trial by using a gas composition of 50% neon, 40% krypton and 10% of xenon and fixing the gas pressure at 3,99±0,27 hPa (3.0 ± 0.2 Torr). The results are shown in Table 4.

**Table 4**

| d/c | Relative luminance [%] |
|---|---|
| 0.05 | 90 |
| 0.1 | 100 |
| 0.2 | 100 |
| 0.3 | 95 |
| 0.4 | 75 |

In the phosphor represented by aY₂O₃·bSc₂₀₃·cSiO₂:dTb, the optimum value of d/c was in the range of 0.1 ≦ d/c ≦ 0.2, and the normal luminance of the lamp was 6,530 cd/m² for d/c = 0.1.

### [Example 5]

An inner peripheral surface of a glass tube 10 mm in outside diameter and 285 mm in length was coated with a green-light-emitting phosphor comprising terbium-activated yttrium scandium silicate, with the scandium concentration varied, to produce lamps for trial, and the luminance of the lamps was measured. In this case, the gas composition was 20% xenon, 30% argon and 50% helium, and the gas pressure was fixed at 1,995 ± 0,266 hPa (1.5 ± 0.2 Torr). The results are shown in Table 5.

In the terbium-activated yttrium scandium silicate phosphor represented by aY₂O₃·bSc₂O₃.cSiO₂:dTb, the optimum value of b/a was in the range of 0.01 ≦ b/a ≦ 0.5, and the normal luminance of the lamp was 6,856 cd/m² for b/a = 0.274

**Table 5**

| b/a | Chemical composition | Relative luminance [%] |
|---|---|---|
| 0 | (Y_{0.93}Tb_{0.07})₂SiO₅ | 100 |
| 0.011 | (Y_{0.92}Sc_{0.01}Tb_{0.07})₂SiO₅ | 101.2 |
| 0.033 | (Y_{0.90}Sc_{0.03}Tb_{0.07})₂SiO₅ | 101.8 |
| 0.057 | (Y_{0.88}Sc_{0.05}Tb_{0.07})₂SiO₅ | 102.3 |
| 0.120 | (Y_{0.83}Sc_{0.1}Tb_{0.07})₂SiO₅ | 103.3 |
| 0.274 | (Y_{0.73}Sc_{0.2}Tb_{0.07})₂SiO₅ | 104.1 |
| 0.476 | (Y_{0.63}Sc_{0.3}Tb_{0.07})₂SiO₅ | 101.0 |
| 0.755 | (Y_{0.53}Sc_{0.4}Tb_{0.07})₂SiO₅ | 98.2 |

### [Example 6]

An inner peripheral surface of a glass tube 8 mm in outside diameter and 285 mm in length was coated with a terbium-activated yttrium gadolinium silicate of a chemical composition of (Y_{0.83}Gd_{0.10}Tb_{0.07})₂SiO₅, electrodes were fitted to both ends of the glass tube in a sealing manner, and the tube was filled with a mixed gas of neon and xenon at a pressure of 0,665 to 13,3 hPa (0.5 to 10 Torr) to produce a lamp. The characteristics of the lamps thus produced were examined by various experiments.

Table 6 shows the experimental results, specifically the lamp characteristics when the neon-xenon mixing ratio and the pressure of the gas filling the glass tube were varied.

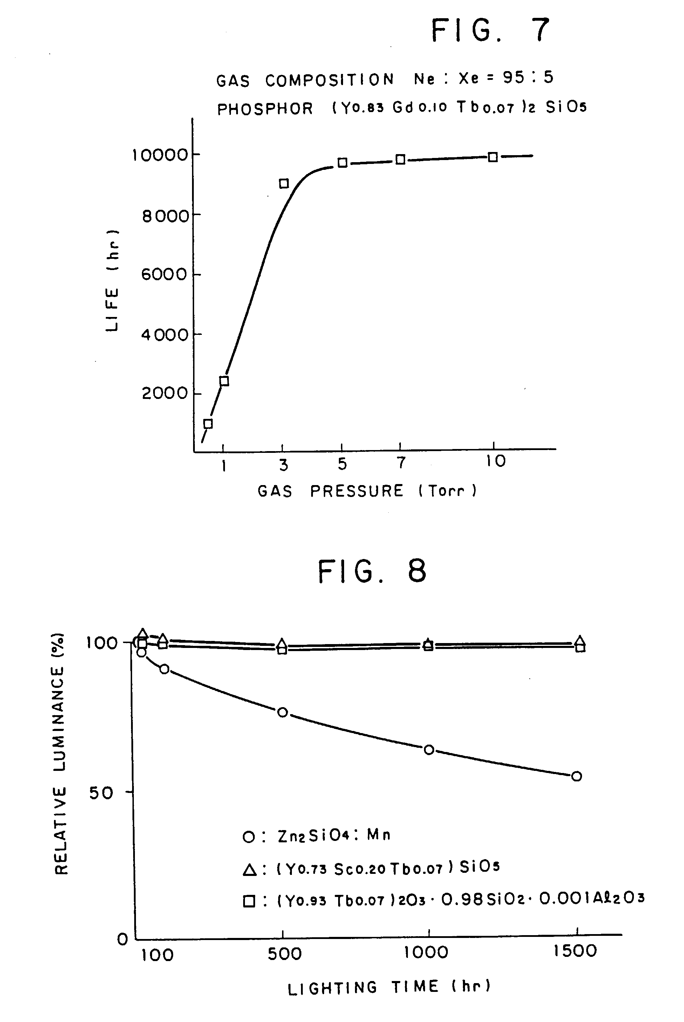

Fig. 6 shows the variation of normal luminance with gas pressure, in the case of using the terbium-activated yttrium gadolinium silicate phosphor (Y_{0.83}Gd_{0.10}Tb_{0.07})₂SiO₅ and in the case of using a manganese-activated zinc silicate phosphor, whereas Fig. 7 shows the relationship of life to gas pressure.

As shown in Table 6 and Fig. 6, in the experiments, a lamp filled with a mixed gas of 95% neon and 5% xenon at a pressure of 3,325 hPa (2.5 Torr) had a normal luminance of 7,960 cd/m², which is 1.7 times the luminance obtained by using a conventional ZnSiO₄:Mn phosphor, and the life of the lamp was 9,500 hours, as shown in Fig. 7.

Besides, the luminance-temperature characteristic was extremely favorable at temperatures of 20 to 150°C, like that shown in Fig. 3.

**Table 6**

| No. | Gas composition [%] | | Gas pressure hPa(Torr) | Normal luminance (cd/m²) |
|---|---|---|---|---|
| | Ne | Xe | | |
| 1 | 99 | 1 | 0,665(0.5) | 16,700 |
| 2 | | | 1,33(1) | 14,300 |
| 3 | | | 3,99(3) | 9,600 |
| 4 | | | 6,65(5) | 5,300 |
| 5 | | | 13,3(10) | 4,050 |
| 6 | 95 | 5 | 0,665(0.5) | 15,000 |
| 7 | | | 1,33(1) | 12,050 |
| 8 | | | 3,99(3) | 9,000 |
| 9 | | | 6,65(5) | 5,450 |
| 10 | | | 13,3(10) | 2,830 |
| 11 | 90 | 10 | 0,665(0.5) | 13,000 |
| 12 | | | 1,33(1) | 9,500 |
| 13 | | | 3,99(3) | 7,080 |
| 14 | | | 6,65(5) | 4,050 |
| 15 | | | 13,3(10) | 3,050 |
| 16 | 50 | 50 | 0,665(0.5) | 9,800 |
| 17 | | | 1,33(1) | 7,030 |
| 18 | | | 3,99(3) | 5,920 |
| 19 | | | 6,65(5) | 3,850 |
| 20 | | | 13,3(10) | 2,970 |

### [Example 7]

An inner surface of a glass tube 8 mm in outside diameter and 250 mm in length was coated with a terbium-activated yttrium gadolinium silicate phosphor, with the terbium concentration varied, and luminance measurement was carried out. In this case, the lamps were produced for trial by using a gas composition of 15% xenon, 60% argon and 25% krypton and fixing the gas pressure at 1,33 ± 0,13 hPa (1.0 ± 0.1 Torr). The results are shown in Table 7.

**Table 7**

| d/c | Relative luminance [%] |
|---|---|
| 0.05 | 90 |
| 0.1 | 100 |
| 0.2 | 100 |
| 0.3 | 97 |
| 0.4 | 83 |

In a phosphor represented by aY₂O₃·bBd₂O₃·cSiO₂:dTb, the optimum value of d/c was in the range of 0.1 ≦ d/c ≦ 0.2, and the normal luminance of the lamp was 8,350 cd/m² for d/c = 0.15.

### [Example 8]

An inner peripheral surface of a glass tube 10 mm in outside diameter and 255 mm in length was coated with a terbium-activated yttrium gadolinium silicate green-light-emitting phosphor, with the gadolinium concentration varied, to produce a lamp for trial, and the luminance of the lamp was measured. In this case, the lamps were produced by using a gas composition of 95% neon and 5% xenon and fixing the gas pressure at 0,665 ± 0,0665 hPa (0.5 ± 0.05 Torr).

The results are shown in Table 8. In a terbium-activated gadolinium yttrium silicate phosphor represented by aY₂O₃·bGd₂O₃·cSc₂O₃:dTb, the optimum value of gadolinium is in the range of 0.1 ≦ b/a ≦ 0.70, and the normal luminance of the lamp is 12,350 cd/m² for b/a = 0.120.

**Table 8**

| b/a | Chemical composition | Relative luminance [%] |
|---|---|---|
| 0 | (Y_{0.93}Tb_{0.07})₂SiO₅ | 100 |
| 0.011 | (Y_{0.92}Gd_{0.01}Tb_{0.07})₂SiO₅ | 101.5 |
| 0.033 | (Y_{0.90}Gd_{0.03}Tb_{0.07})₂SiO₅ | 101.9 |
| 0.057 | (Y_{0.88}Gd_{0.05}Tb_{0.07})₂SiO₅ | 102.8 |
| 0.120 | (Y_{0.83}Gd_{0.1}Tb_{0.07})₂SiO₅ | 103.9 |
| 0.274 | (Y_{0.73}Gd_{0.2}Tb_{0.07})₂SiO₅ | 103.5 |
| 0.476 | (Y_{0.63}Gd_{0.3}Tb_{0.07})₂SiO₅ | 102.0 |
| 0.755 | (Y_{0.53}Gd_{0.4}Tb_{0.07})₂SiO₅ | 99.5 |

### [Example 9]

An inner peripheral surface of a glass tube 8 mm in outside diameter and 150 mm in length was coated with a terbium-activated yttrium silicate phosphor, individually containing boron, phosphorus or aluminum. Such glass tubes were filled with a gas of a composition of 10% xenon, 40% neon and 50% argon at a pressure of 0,931 ± 0,027 hPa (0.7 ± 0.02 Torr) to produce lamps for trial.

Measurement results of the luminance of the lamps thus produced are shown in Table 9. As shown, similar effects on improvement of luminance were obtained when part of silicon was replaced by boron, phosphorus or aluminum.

**Table 9**

| No. | Chemical composition | Relative luminance [%] |
|---|---|---|
| 1 | (Y_{0.93}Tb_{0.07})₂SiO₅ | 100 |
| 2 | (Y_{0.93}Tb_{0.07})₂O₃·0.95SiO₂·0.025B₂O₃ | 101.3 |
| 3 | (Y_{0.93}Tb_{0.07})₂O₃·0.90SiO₂·0.05B₂O₃ | 102.5 |
| 4 | (Y_{0.93}Tb_{0.07})₂O₃·0.98SiO₂·0.001P₂O₅ | 101.1 |
| 5 | (Y_{0.93}Tb_{0.07})₂O₃·0.95SiO₂·0.025P₂O₅ | 102.3 |
| 6 | (Y_{0.93}Tb_{0.07})₂O₃·0.99SiO₂·0.0005Al₂O₃ | 103.1 |
| 7 | (Y_{0.93}Tb_{0.07})₂O₃·0.98SiO₂·0.001Al₂O₃ | 103.3 |
| Prior art | Zn₂SiO₄ | 55.0 |

Fig. 8 shows the deterioration of luminous intensity (lumen maintenance factor) during lighting of the lamps produced by using the terbium-activated yttrium scandium silicate phosphor (Y_{0.73}Sc_{0.20}Tb_{0.07})₂SiO₅ described in Example 3, the terbium-activated yttrium aluminum silicate phosphor represented by (Y_{0.93}Tb_{0.07})₂O₃·0.98SiO₂·0.001Al₂O₃ in Example 9 and a conventional manganese-activated zinc silicate phosphor (Zn₂SiO₄:M), respectively.

As is clear from Fig. 8, the lamps according to the examples of this invention have a lumen maintenance factor after 1,500 hours of lighting of 97 to 98%, as contrasted to 53% of the lamp according to the prior art. Thus, it is seen that the lamps according to this invention show marked improvements in deterioration of luminous intensity, as compared with the lamp according to the prior art.

Though Fig. 8 shows the lumen maintenance factor for only two of the above examples, similar results have been obtained with the green-light-emitting phosphors according to the other examples.

Besides, though the lamps according to the above examples are the so-called rare gas discharge lamps in which mercury is not used as an excitation source for the phosphor but vacuum ultraviolet rays emitted by the rare gas are used, no effects of differences in the phosphor on instantaneous lighting were observed, and the lamps have been confirmed to have characteristics comparable to those of the lamps according to the prior art.

## Claims

1. A green-light-emitting gas discharge lamp comprising a glass tube filled with gas capable of emitting vacuum ultraviolet rays, and a layer of green-light-emitting phosphor comprises terbium-activated yttrium silicate provided on an inner surface of the glass tube,
characterized in that
the gas is a rare gas emitting ultraviolet rays of a wavelength of not more than 200 nm and comprising at least one selected from the group consisting of xenon, neon, helium, argon and krypton.

2. A green-light-emitting gas discharge lamp as set forth in claim 1, wherein the terbium-activated yttrium silicate phosphor comprises at least one selected from the group consisting of boron, aluminum, phosphorus, scandium and the lanthanum series elements.

3. A green-light-emitting gas discharge lamp as set forth in claim 2, wherein the green-light-emitting phosphor is a terbium-activated yttrium scandium silicate.

4. A green-light-emitting gas discharge lamp as set forth in claim 2, wherein the green-light-emitting phospor is a terbium-activated yttrium gadolinium silicate.

5. A green-light-emitting gas discharge lamp as set forth in claim 1, wherein a main peak in intensity of said emitting green light occurs at a wavelength of about 540 nm.

6. A green-light-emitting gas discharge lamp as set forth in claim 1, wherein the phosphor is essentially composed of terbium-activated yttrium silicate phosphor and the rare gas is a mixed gas essentially composed of neon and xenon.

7. A green-light-emitting gas discharge lamp as set forth in claim 1, wherein the phosphor is essentially composed of a terbium-activated yttrium scandium silicate phosphor and the rare gas is a mixed gas essentially composed of neon and xenon.

8. A green-light-emitting gas discharge lamp as set forth in claim 1, wherein the phosphor is essentially composed of a terbium-activated yttrium scandium silicate and the rare gas is a mixed gas essentially composed of neon, krypton and xenon.

9. A green-light-emitting gas discharge lamp as set forth in claim 1, wherein the phosphor is essentially composed of a terbium-activated yttrium scandium silicate and the rare gas is a mixed gas essentially composed of xenon, argon and helium.

10. A green-light-emitting gas discharge lamp as set forth in claim 1, wherein the phosphor is essentially composed of a terbium-activated yttrium gadolinium silicate and the rare gas is a mixed gas essentially composed of neon and xenon.

11. A green-light-emitting gas discharge lamp as set forth in claim 1, wherein the phosphor is essentially composed of a terbium-activated yttrium gadolinium silicate and the rare gas is a mixed gas essentially composed of xenon, argon and krypton.

12. A green-light-emitting gas discharge lamp as set forth in claim 1, wherein the phosphor is essentially composed of a terbium-activated yttrium silicate phosphor comprising at least one selected from the group consisting of boron, phosphorous, and aluminum and the rare gas is a mixed gas essentially composed of xenon, neon and argon.

## Patentansprüche

1. Grünlichtausstrahlende Gasentladungslampe mit einer Glasröhre, gefüllt mit Gas, welches in der Lage ist, ultraviolette Strahlen im Vakuum auszusenden, und einer Schicht grünlichtausstrahlenden Phosphors, welcher terbiumaktiviertes Yttriumsilikat enthält, welche auf einer inneren Oberfläche der Glasröhre angeordnet ist,
dadurch gekennzeichnet, daß
das Gas ein Edelgas ist, welches ultraviolette Strahlung mit einer Wellenlänge nicht größer als 200 nm aussendet und mindestens eines der Gase der aus den Gasen Xenon, Neon, Helium, Argon und Krypton bestehenden Gruppe enthält.

2. Grünlichtausstrahlende Gasentladungslampe nach Anspruch 1, dadurch gekennzeichnet, daß der terbiumaktivierte Yttriumsilikat-Phosphor mindestens eines der Elemente der aus den Elementen Bor, Aluminium, Phosphor, Scandium und den Lanthan-Serienelementen bestehenden Gruppe enthält.

3. Grünlichtausstrahlende Gasentladungslampe nach Anspruch 2, dadurch gekennzeichnet, daß der grünlichtausstrahlende Phosphor ein terbiumaktiviertes Yttriumscandiumsilikat ist.

4. Grünlichtausstrahlende Gasentladungslampe nach Anspruch 2, dadurch gekennzeichnet, daß der grünlichtausstrahlende Phosphor ein terbiumaktiviertes Yttriumgadoliniumsilikat ist.

5. Grünlichtausstrahlende Gasentladungslampe nach Anspruch 1, dadurch gekennzeichnet, daß eine Hauptspitze in der Intensität des ausgestrahlten grünen Lichtes bei einer Wellenlänge von etwa 540 nm auftritt.

6. Grünlichtausstrahlende Gasentladungslampe nach Anspruch 1, dadurch gekennzeichnet, daß der Phosphor im wesentlichen aus terbiumaktiviertem Yttriumsilikat-Phosphor besteht und daß das Edelgas ein gemischtes Gas ist, welches im wesentlichen aus Neon und Xenon besteht.

7. Grünlichtausstrahlende Gasentladungslampe nach Anspruch 1, dadurch gekennzeichnet, daß der Phosphor im wesentlichen aus terbiumaktivertem Yttriumscandiumsilikat-Phosphor besteht und daß das Edelgas ein gemischtes Gas ist, welches im wesentlichen aus Neon und Xenon besteht.

8. Grünlichtausstrahlende Gasentladungslampe nach Anspruch 1, dadurch gekennzeichnet, daß der Phosphor im wesentlichen aus terbiumaktivertem Yttriumscandiumsilikat besteht und daß das Edelgas ein gemischtes Gas ist, welches im wesentlichen aus Neon, Krypton und Xenon besteht.

9. Grünlichtausstrahlende Gasentladungslampe nach Anspruch 1, dadurch gekennzeichnet, daß der Phosphor im wesentlichen aus terbiumaktivertem Yttriumscandiumsilikat besteht und daß das Edelgas ein gemischtes Gas ist, welches im wesentlichen aus Xenon, Argon und Helium besteht.

10. Grünlichtausstrahlende Gasentladungslampe nach Anspruch 1, dadurch gekennzeichnet, daß der Phosphor im wesentlichen aus terbiumaktivertem Yttriumgadoliniumsilikat besteht und daß das Edelgas ein gemischtes Gas ist, welches im wesentlichen aus Neon und Xenon besteht.

11. Grünlichtausstrahlende Gasentladungslampe nach Anspruch 1, dadurch gekennzeichnet, daß der Phosphor im wesentlichen aus terbiumaktivertem Yttriumgadoliniumsilikat besteht und daß das Edelgas ein gemischtes Gas ist, welches im wesentlichen aus Xenon, Argon und Krypton besteht.

12. Grünlichtausstrahlende Gasentladungslampe nach Anspruch 1, dadurch gekennzeichnet, daß der Phosphor im wesentlichen aus terbiumaktivertem Yttriumsilikat-Phosphor besteht, welcher mindestens eines der Elemente der aus den Elementen Bor, Phosphor und Aluminium bestehenden Gruppe enthält und daß das Edelgas ein gemischtes Gas ist, welches im wesentlichen aus Xenon, Neon und Argon besteht.

## Revendications

1. Lampe à décharge émettant une lumière verte, comprenant un tube de verre rempli d'un gaz, capable d'émettre des rayons ultraviolets dans le vide, et une couche d'une substance luminescente émettant une lumière verte, comprenant du silicate d'yttrium activé par du terbium, disposé sur une surface intérieure du tube de verre caractérisée en ce que le gaz est un gaz rare émettant des rayons ultraviolets ayant une longueur d'onde non supérieure à 200 nm et comprenant au moins un gaz choisi dans le groupe constitué par le xénon, le néon, l'hélium, l'argon et le krypton.

2. Lampe à décharge émettant une lumière verte selon la revendication 1, dans laquelle la substance luminescente à base de silicate d'yttrium activé par du terbium comprend au moins une substance choisie dans le groupe constitué par le bore, l'aluminium, le phosphore, le scandium et les éléments de la série du lanthane.

3. Lampe à décharge émettant une lumière verte selon la revendication 2, dans laquelle la substance luminescente émettant une lumière verte est un silicate d'yttrium et de scandium activé par du terbium.

4. Lampe à décharge émettant une lumière verte selon la revendication 2, dans laquelle la substance luminescente émettant une lumière verte est un silicate d'yttrium et de gadolinium activé par du terbium.

5. Lampe à décharge émettant une lumière verte selon la revendication 1, dans laquelle un pic d'intensité maximale de ladite lumière verte émise a lieu à une longueur d'onde d'environ 540 nm.

6. Lampe à décharge émettant une lumière verte selon la revendication 1, dans laquelle la substance luminescente est essentiellement constituée d'une substance luminescente à base d'un silicate d'yttrium activé par du terbium et le gaz rare est un mélange gazeux constitué essentiellement de néon et de xénon.

7. Lampe à décharge émettant une lumière verte selon la revendication 1, dans laquelle la substance luminescente est essentiellement constituée d'une substance luminescente à base d'un silicate d'yttrium et de scandium activé par du terbium, et le gaz rare est un mélange gazeux constitué essentiellement de néon et de xénon.

8. Lampe à décharge émettant une lumière verte selon la revendication 1, dans laquelle la substance luminescente est essentiellement constituée d'un silicate d'yttrium et de scandium activé par du terbium, et le gaz rare est un mélange gazeux constitué essentiellement de néon, de krypton et de xénon.

9. Lampe à décharge émettant une lumière verte selon la revendication 1, dans laquelle la substance luminescente est essentiellement constituée d'un silicate d'yttrium et de scandium activé par du terbium, et le gaz rare est un mélange gazeux constitué essentiellement de xénon, d'argon et d'hélium.

10. Lampe à décharge émettant une lumière verte selon la revendication 1, dans laquelle la substance luminescente est essentiellement constituée d'un silicate d'yttrium et de gadolinium activé par du terbium, et le gaz rare est un mélange gazeux constitué essentiellement de néon et de xénon.

11. Lampe à décharge émettant une lumière verte selon la revendication 1, dans laquelle la substance luminescente est essentiellement constituée d'un silicate d'yttrium et de gadolinium activé par du terbium, et le gaz rare est un mélange gazeux constitué essentiellement de xénon, d'argon et de krypton.

12. Lampe à décharge émettant une lumière verte selon la revendication 1, dans laquelle la substance luminescente est essentiellement constituée d'une substance luminescente à base d'un silicate d'yttrium activé par du terbium comprenant au moins une substance choisie dans le groupe constitué par le bore, le phosphore et l'aluminium, et le gaz rare est un mélange gazeux constitué essentiellement de xénon, de néon et d'argon.
